# DEMANDE DE BREVET EUROPEEN

(11) **EP 1 787 556 A1**
(43) Date de publication de la demande: **23.05.2007**
(21) Numéro de dépôt: 06291769.5
(22) Date de dépôt: 15.11.2006
(51) Int. Cl.: A47J 39/00, A47J 39/02, B65D 81/34

(54) **Dispositif de transport et de stockage de produits alimentaires**

(30) Priorité: 16.11.2005 FR 0511623
(71) Demandeur: Constructions Isothermiques Bontami - C.I.B., 02100 Saint-Quentin (FR)
(72) Inventeur: Covin, Frédéric, 02800 Vendeuil (FR)
(74) Mandataire: de Kernier, Gabriel

(57) **Abrégé**

Dispositif de transport et de stockage de produits alimentaires comprenant une caisse jetable (2) comprenant des parois latérales (5) et une paroi supérieure (6) réalisées essentiellement en panneaux biodégradables et un socle (3) capable de supporter la caisse (2) et pourvu de moyens pour chauffer et/ou refroidir l'intérieur de la caisse (2).

## Description

La présente invention concerne le domaine de la conservation et de la manutention de produits sensibles à la température, notamment de produits alimentaires.

On connaît à cet égard le document FR-A-2 677 000, qui décrit un conditionnement calorifugé pour le transport réfrigéré ou chaud de récipients contenant des produits alimentaires. Le conditionnement est formé par un caisson dont au moins une partie est conformée pour constituer un plateau de centrage et de support pour au moins un récipient, le plateau délimitant autour du récipient une enceinte communiquant avec une source de production d'un fluide froid ou chaud, permettant de créer une circulation du fluide en vue de placer à une température respectivement froide ou chaude les produits alimentaires. Le caisson comprend une série de plateaux amovibles montés de manière superposée entre le couvercle et le fond et maintenus à l'aide de moyens d'assemblage.

Toutefois, ce type de conditionnement est relativement complexe, en ce sens qu'il nécessite d'assembler un grand nombre de pièces, notamment le fond, les plateaux et le couvercle. Le fait de disposer une cartouche de génération de froid ou de chaud complique le conditionnement. Le conditionnement est difficile à recycler.

La présente invention vise à remédier aux inconvénients du conditionnement ci-dessus.

La présente invention propose un dispositif de transport et de stockage de produits alimentaires, de structure et d'utilisation simples, permettant le respect des règles d'hygiène et une manipulation aisée.

Le dispositif de transport et de stockage de produits alimentaires, comprend une caisse jetable comprenant des parois latérales et une paroi supérieure réalisées essentiellement en panneaux biodégradables, et un socle capable de supporter la caisse et pourvu de moyens pour chauffer et/ou refroidir l'intérieur de la caisse jetable. Le contenu de la caisse peut être refroidi ou chauffé ou maintenu à une température inférieure ou supérieure à la température ambiante de façon simple. Le coût de la caisse est raisonnable. La caisse jetable est avantageuse sur le plan de l'hygiène. Les panneaux de la caisse peuvent être recyclés ou valorisés par combustion avec récupération de l'énergie. Les panneaux de la caisse peuvent être réalisés à partir de matières recyclées ou renouvelables, notamment la fibre de cellulose. La caisse présente, à la fois, des qualités écologiques, économiques et d'hygiène. En vue d'une combustion propre ou d'un recyclage plus aisé, la caisse peut être réalisée entièrement ou en partie en carton.

Avantageusement, les panneaux sont ondulés ou alvéolés, enfermant une couche d'air entre des feuilles pour former un panneau isolant. La consommation d'énergie pour le refroidissement ou le maintien à une température inférieure à la température ambiante est réduite.

Dans un mode de réalisation, le dispositif comprend au moins deux trous traversant la paroi de fond pour permettre l'entrée d'un fluide réfrigérant et la sortie du fluide réchauffé ou refroidi par la circulation autour des produits alimentaires. Le fluide peut être refroidi ou réchauffé à nouveau. Lorsque le fluide réfrigérant réchauffé est à une température inférieure à la température ambiante, la consommation énergétique est réduite.

Dans un mode de réalisation, la caisse est dépliable.

Dans un autre mode de réalisation, la caisse est non repliable.

Dans un mode de réalisation, précédentes, la caisse est gerbable.

Dans un mode de réalisation, la caisse comprend au moins un trou traversant la paroi supérieure pour permettre la circulation d'un fluide réfrigérant vers le haut. Plusieurs caisses superposées du même type peuvent ainsi recevoir un fluide réfrigérant. Les caisses superposées peuvent présenter des dimensions différentes.

Dans un mode de réalisation, le socle comprend des moyens de refroidissement d'un fluide réfrigérant, une surface supérieure prévue pour supporter au moins une caisse, et au moins une conduite d'amenée du fluide réfrigérant en provenance des moyens de refroidissement, débouchant sur la surface supérieure. L'emplacement de ladite conduite peut correspondre au trou traversant la paroi de fond de la caisse de façon que le fluide réfrigérant pénètre dans ladite caisse. On peut ainsi associer un socle, le cas échéant muni de roues, capable de supporter au moins une caisse et d'en refroidir le contenu, au moins et une telle caisse. Le socle est pourvu d'un élément de stockage d'énergie, par exemple une batterie. Le socle peut être pourvu d'un moyen de rechargement de l'élément de stockage d'énergie.

Dans un mode de réalisation, le socle comprend des moyens de chauffage d'un fluide caloporteur, et au moins une conduite d'amenée du fluide caloporteur en provenance des moyens de chauffage, débouchant sur la surface supérieure. L'emplacement de la conduite peut correspondre à un trou traversant la paroi de fond de la caisse de façon que le fluide caloporteur pénètre dans ladite caisse. On peut chauffer le contenu de la caisse après l'avoir maintenu au froid. Pour des produits alimentaires, la température de chauffage pourra être de l'ordre de 60 à 80°C et la température de refroidissement pourra être de l'ordre de 1 à 10°C.

Dans un mode de réalisation, un trou traversant une paroi de fond de la caisse est commun au fluide réfrigérant et au fluide caloporteur.

Dans un mode de réalisation, les moyens de chauffage et les moyens de refroidissement comprennent un compresseur commun. Le compresseur commun est relié à un échangeur thermique faisant partie des moyens de chauffage et à un échangeur frigorifique faisant partie des moyens de refroidissement. Les échangeurs peuvent se présenter sous la forme d'un serpentin.

Dans un mode de réalisation, les moyens de chauffage comprennent une résistance électrique. La résistance électrique peut venir en plus ou non de l'échangeur thermique.

Bien entendu, le dispositif peut comprendre à la fois une résistance électrique ou un moyen de chauffage chimique, d'une part, et un serpentin de dissipation thermique, d'autre part, faisant partie des moyens de chauffage. Le fluide caloporteur utilisé par les moyens de chauffage peut être l'air ambiant, ou encore l'air contenu à l'intérieur de la caisse. Il en va de même pour les moyens de refroidissement.

On dispose ainsi d'un système complet comprenant, d'une part, un socle facile à déplacer, notamment au moyen de roues, et qui est prévu pour être réutilisé de nombreuses fois, et d'une armoire frigorifique jetable, de masse et de coût faibles, et pouvant être conçue pour un usage unique, ce qui est particulièrement avantageux en termes d'hygiène. L'armoire jetable peut être de relativement grandes dimensions, permettant d'accueillir un chariot à plateaux sur lequel peuvent être disposées un grand nombre d'assiettes préalablement dressées qui peuvent ainsi être conservées à une température froide de conservation lors du chargement dans un camion, puis être transportées dans un camion qui peut être dépourvu d'installation frigorifique, ce qui s'avère particulièrement économique, puis déchargé sur le lieu d'utilisation des plats dressés, et ce en diminuant le risque de rupture de la chaîne du froid. En effet, les aliments et les plats dressés eux-mêmes ne font plus l'objet de manipulation directe entre l'installation sur le chariot et leur sortie de l'armoire en vue de leur distribution. Peu avant la distribution, les moyens de chauffage peuvent être activés afin de mener les plats dressés à la température convenable, par exemple de l'ordre de 60 à 80°C.

La présente invention sera mieux comprise à la lecture de la description détaillée de quelques modes de réalisation pris à titre d'exemples nullement limitatifs et illustrés par les dessins annexés, sur lesquels:

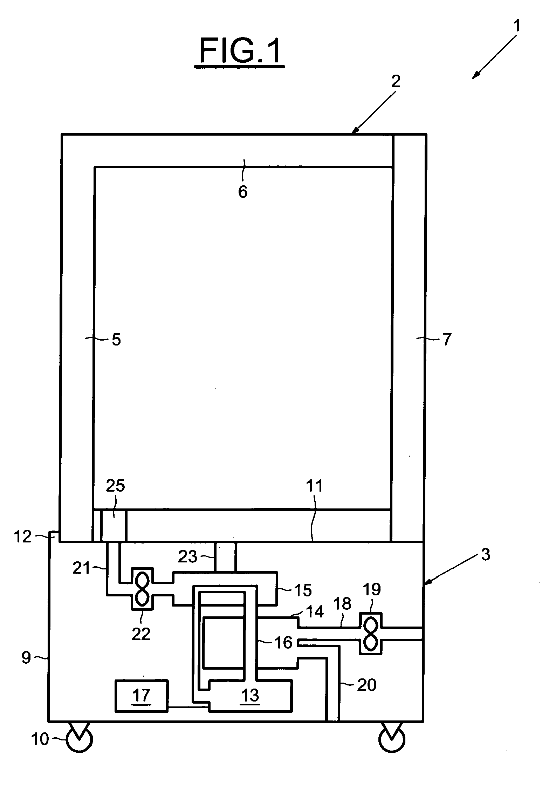

- les figures 1 à 4 illustrent différents modes de réalisation du dispositif.

Comme on peut le voir sur la figure 1, le dispositif de transport et de stockage 1 comprend une caisse 2 réalisée essentiellement ou uniquement en carton et un socle frigorigène 3. La caisse 2 comprend une paroi de fond 4, des parois latérales 5 et une paroi supérieure 6. L'une des parois latérales 5 peut former une porte 7, qui peut être ouverte ou fermée et qui peut être articulée par un pli vertical formé dans une ou plusieurs feuilles de carton de faible épaisseur et bloquée en position fermée par des rabats de carton, non représentés. Un trou traversant 8 est formé dans la paroi inférieure 4. La caisse 2 définit un espace intérieur utile, de forme générale parallélépipédique, dans lequel peuvent être disposés des produits alimentaires, ou plus généralement des produits que l'on souhaite maintenir à une température déterminée. Le trou 8 permet de faire entrer dans l'espace intérieur de la caisse 2 un fluide réfrigérant, par exemple de l'air à une température basse, par exemple légèrement inférieure à la température à laquelle on souhaite conserver les produits disposés dans la caisse. Des trous de petites dimensions, non visibles sur la figure 1, peuvent être prévus dans les parois latérales 5 pour éviter de créer une surpression dans l'espace intérieur de la caisse 2.

Les parois inférieures 4, latérales 5 et supérieures 6 peuvent être formées à partir d'un même panneau de carton découpé, plié et assemblé. Le panneau de carton peut présenter une épaisseur de l'ordre de 5 à 10 cm. Le panneau de carton peut être pourvu de deux feuilles pleines de bord, entre lesquelles sont formées des alvéoles perpendiculaires auxdites feuilles de bord, conférant ainsi audit panneau de carton d'excellentes propriétés d'isolation thermique et une bonne résistance mécanique. Le panneau de carton présente ainsi une structure de sandwich en nid d'abeilles à alvéoles régulières ou irrégulières. La caisse 2 est légère et non polluante en étant fabriquée en matériau renouvelable. Les panneaux peuvent aussi comprendre des matériaux synthétiques biodégradables.

Le socle frigorigène 3 est prévu pour supporter au moins une caisse 2, tout en fournissant un fluide réfrigérant vers l'espace intérieur de ladite caisse 2. Le socle frigorifique 3 comprend un bâti 9 supporté par des roues 10 prévues pour contact avec le sol et permettant un déplacement aisé du socle 3. Le bâti 9 est pourvu d'une surface supérieure 11, sur laquelle est disposée la paroi inférieure 4 de la caisse 2. Le socle 9 peut également être pourvu d'un rebord 12 en saillie vers le haut par rapport à la surface supérieure 11 pour faciliter le positionnement précis de la caisse 2 sur le socle 3 et faciliter le déplacement de l'ensemble du dispositif lorsqu'un opérateur exerce une poussée sur l'une des parois latérales 5 de la caisse 2. En variante, le rebord 12 peut être continu ou discontinu, et peut être formé sur les quatre côtés de la surface supérieure 11 du bâti 9.

À l'intérieur du bâti 9, sont disposés les moyens frigorifiques. Plus précisément, le socle 3 comprend un compresseur 13, un échangeur thermique 14 et un évaporateur 15. Une conduite 16 de sortie du compresseur 13 passe dans l'échangeur thermique 14, ce qui permet le refroidissement du gaz comprimé qui a subi un échauffement lors de la compression. Le gaz comprimé refroidi par l'échangeur thermique 14 passe ensuite dans l'évaporateur 15, également dénommé « détendeur », dans lequel la diminution de pression provoque un refroidissement du gaz. Le gaz détendu et réchauffé dans l'évaporateur 15 retourne ensuite au compresseur 13. Ledit gaz passant dans le compresseur 13 peut être un gaz couramment utilisé dans le domaine frigorifique. Le compresseur 13 est alimenté en énergie électrique par une batterie 17. L'échangeur thermique 14 est pourvu d'une conduite 18 d'amenée d'air extérieur, sur laquelle est disposé un ventilateur 19, et d'une conduite de sortie 20. Le ventilateur 19 est également alimenté, de façon non représentée, par la batterie 17. L'air entre à la température ambiante dans la conduite 18, se réchauffe dans l'échangeur thermique 14 en refroidissant le gaz comprimé issu du compresseur 13 et sort à une température supérieure à la température ambiante par la conduite de sortie 20.

De façon similaire, l'évaporateur 15 est pourvu d'une conduite d'entrée 21 équipée d'un ventilateur 22 alimenté, de façon non représentée, par la batterie 17 et d'une conduite de sortie 23 débouchant dans la surface supérieure 11 du bâti 9 au droit du trou 8 formé dans la paroi inférieure de la caisse 2. L'air entre dans la conduite 21, est refroidi dans le détendeur 15 en réchauffant le gaz détendu provenant de la conduite 16 et retournant ensuite au compresseur 13. L'air refroidi dans l'évaporateur 15 passe ensuite dans la conduite 23, puis dans le trou 8 et se répand dans l'espace intérieur de la caisse 2, ce qui assure une baisse de la température à l'intérieur de la caisse 2.

Pour des raisons de simplicité du dessin, la conduite 16 a été représentée de façon schématique et simplifiée dans l'échangeur thermique 14 et dans l'évaporateur 15. Néanmoins, l'on cherchera à augmenter les surfaces d'échange thermique. À cette fin, la conduite 16 se présentera avantageusement sous la forme d'un serpentin présentant une longueur développée importante.

La paroi inférieure 4 comprend un trou supplémentaire 25 formé à une certaine distance du trou 8 et traversant également la paroi inférieure 4. Au droit du trou 25 et dans la surface supérieure 11 du socle 3 est prévue l'entrée de la conduite 21 qui débouche dans l'évaporateur 15. Ainsi, la conduite 21 prélève de l'air dans l'espace intérieur de la caisse 2, ledit air étant ensuite refroidi dans l'évaporateur 15, puis envoyé dans l'espace intérieur de la caisse 2 par l'intermédiaire de la conduite 23 et du trou 8. On établit ainsi une circulation d'air entre l'intérieur de la caisse 2 et le détendeur 15, ce qui assure d'excellentes performances énergétiques dans le cas du maintien d'aliments à une température basse.

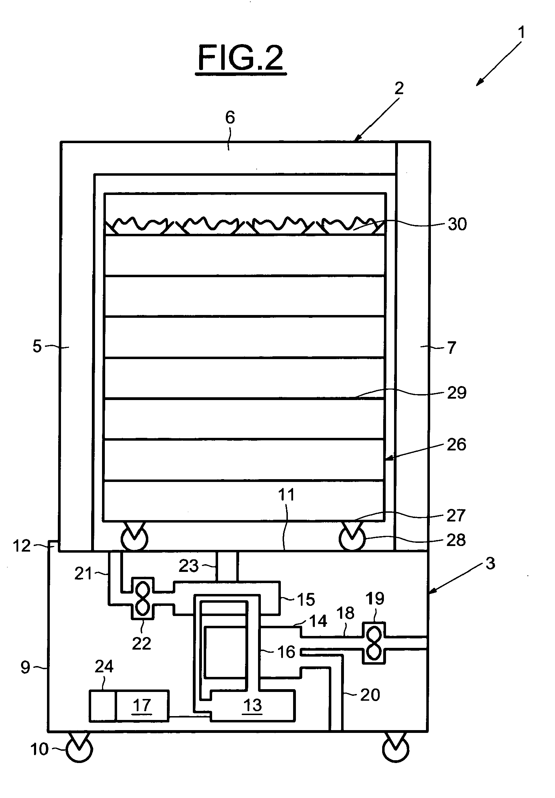

Le mode de réalisation illustré sur la figure 2 est distinct du précédent en ce que la batterie 17 est en outre pourvue d'un chargeur 24 qui peut être relié de façon filaire à une alimentation électrique, en particulier au secteur électrique. On facilite ainsi l'utilisation du socle frigorifique 3 dont la batterie 17 peut, de façon aisée, être rechargée. Par ailleurs, la caisse 2 est dépourvue de paroi inférieure, le socle 3 étant pourvu d'une isolation sous la surface supérieure 11. La quantité de panneaux de carton utilisés pour former la caisse 2 est ainsi réduite.

Comme illustré sur la figure 2, un chariot 26 comprenant un châssis 27, des roues 28 supportant le châssis 27 et une pluralité de plateaux 29 superposés, est disposé dans l'espace intérieur de la caisse 2. Sur les plateaux 29, peuvent être disposées des assiettes 30 dressées au préalable, c'est-à-dire entièrement préparées et prêtes à servir. Bien entendu, en pratique, l'ensemble des plateaux 29 est chargé avec des assiettes 30.

Le dispositif peut être utilisé comme suit. Un traiteur prépare en un premier lieu, par exemple l'établissement principal dudit traiteur, des assiettes 30 prêtes à servir. Les assiettes 30 peuvent comprendre, à titre d'exemple, un mets à servir à froid comme une entrée à base de crudités. Au fur et à mesure de leur préparation, les assiettes 30 sont disposées sur les plateaux 29 du chariot 26. Une fois que l'ensemble des assiettes 30 est ainsi disposé dans le chariot 26 ou que le chariot 26 est rempli, un opérateur dispose ledit chariot 26 dans une caisse 2 d'un dispositif 1, par exemple au moyen d'un petit quai de chargement permettant de faire monter le chariot 26 sur le socle 3. La mise en fonctionnement du socle frigorifique 3 est alors déclenchée. La batterie 17 fournit de l'énergie au compresseur 13. Les ventilateurs 19 et 22 sont mis en fonctionnement, ce qui permet de faire entrer par le trou 8 de l'air froid qui forme un fluide réfrigérant. Les assiettes 30 sont ainsi maintenues à une température basse, par exemple de l'ordre de 3 à 6°C, ce qui permet leur conservation dans d'excellentes conditions.

Le dispositif 1 peut ensuite être chargé dans un véhicule de transport, par exemple un camion standard dépourvu d'installation frigorifique, et amené en un deuxième lieu, par exemple une salle où se tient un banquet. Lorsque les assiettes 30 doivent être disposées sur les tables, la porte 7 de la caisse 2 est ouverte et, soit les assiettes 30 sont prises par des serveurs et posées sur les tables, soit le chariot 26 est sorti de la caisse 2, puis les assiettes 30 disposées sur les tables. La caisse 2 peut ensuite être jetée, ce qui évite une possible contamination bactérienne, au cas peu probable, mais qui ne peut être totalement exclu, où un aliment serait venu en contact avec l'une des parois de la caisse 2, en particulier dans l'espace intérieur. En raison de la composition de la caisse 2, essentiellement ou totalement en carton, la caisse 2 peut être facilement recyclée ou brûlée avec valorisation énergétique. Le socle frigorifique 3 protégé du contact avec les aliments qui sont disposés dans la caisse 2, pourra lui être ramené au premier lieu en vue d'autres utilisations.

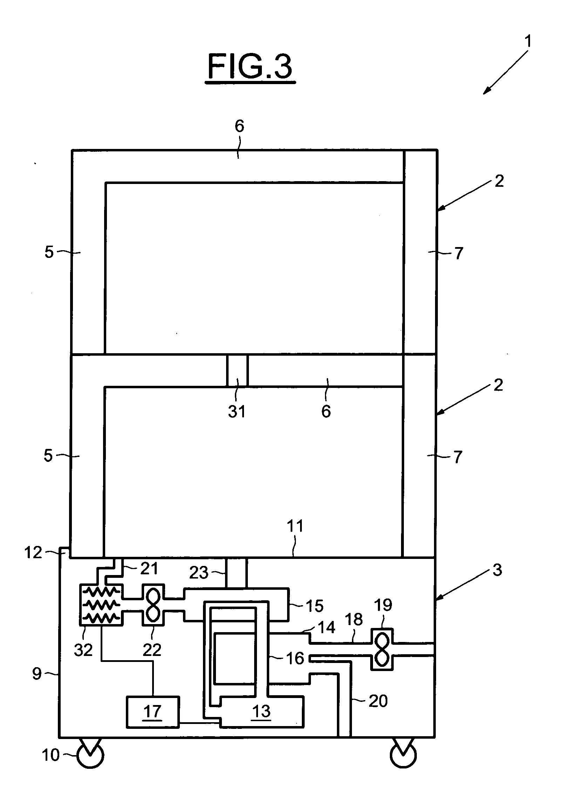

Le mode de réalisation illustré sur la figure 3 se rapproche de celui illustré sur la figure 1, à ceci près qu'une pluralité de caisses 2 dépourvues de paroi inférieure sont disposées sur le socle frigorifique 3. Une première caisse 2 est disposée en contact avec la surface supérieure 11 du bâti 9 du socle frigorifique 3 et est pourvue d'un trou 31 formé dans la paroi supérieure 6. On assure ainsi une communication entre plusieurs caisses 2 superposées, ce qui permet de refroidir l'espace intérieur d'une pluralité de caisses 2.

Par ailleurs, le socle frigorifique 3 est pourvu d'un moyen de chauffage sous la forme d'une résistance électrique 32 disposée sur la conduite 21 et alimentée par la batterie 17. Un utilisateur peut ainsi se servir du socle 3 comme élément de refroidissement ou comme élément de chauffage. Des assiettes contenant les aliments qui doivent être servis chauds peuvent ainsi être disposées dans une caisse 2 après avoir été dressées et maintenues à une température élevée, par exemple comprise entre 50 et 80° par le socle chauffant 3. Dans le cas du chauffage, le compresseur 13 et le ventilateur 19 sont arrêtés, le ventilateur 22 et les résistances électriques 32 sont alimentés par la batterie 17, ce qui assure la circulation d'un air chaud dans l'espace intérieur des caisses 2.

Une autre utilisation possible du socle 3 consiste à maintenir l'espace intérieur des caisses 2 à une température basse pour la conservation des aliments, puis avant un service, par exemple 30 à 60 minutes auparavant, le compresseur 13 et le ventilateur 19 sont arrêtés, le ventilateur 22 est maintenu en fonctionnement. La résistance électrique 32 est alimentée et l'espace intérieur des caisses 2 est chauffé jusqu'à une température suffisante pour servir les assiettes qui peuvent y être disposées.

Une autre possibilité d'utilisation du dispositif de transport et de stockage 1 consiste à disposer dans les caisses 2 des aliments relativement chauds qui viennent d'être préparés, puis à effectuer une étape de refroidissement pour les amener à une température de conservation, par exemple inférieure à 10°C, à les transporter à l'intérieur des caisses 2. Avant de servir les aliments, une étape de réchauffage est mise en oeuvre pour porter les aliments à la température à laquelle ils doivent être servis. Les aliments peuvent ainsi subir une étape de refroidissement, une étape de maintien à température basse, y compris lors d'un transport, puis une étape de réchauffage, et ce tout en restant disposés dans une même caisse 2 associée à un même socle 3, ce qui garantit une grande simplicité d'utilisation, une diminution du risque de mauvaise manipulation des aliments, un excellent respect de la continuité de la chaîne du froid et par conséquent des aliments présentant une sûreté hygiénique plus élevée et une manutention particulièrement simple.

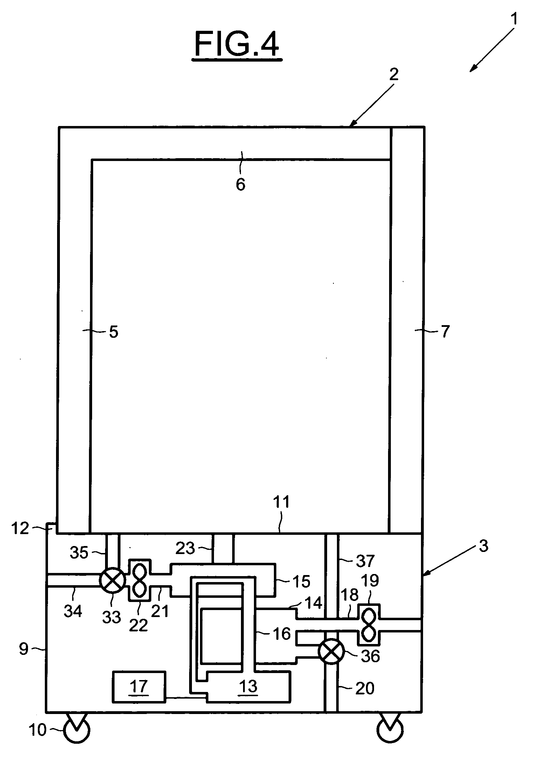

Le mode de réalisation illustré sur la figure 4 se rapproche de ceux qui sont illustrés sur les figures 1 et 2. Le socle frigorifique comprend une conduite 21 pourvue d'une vanne trois voies 33 en amont de laquelle sont disposées une conduite 34 débouchant à l'extérieur du socle 3 et une conduite 35 débouchant sur la surface supérieure 11 du socle 3. La vanne 33 peut mettre en communication les conduites 21 et 34 pour prélever de l'air extérieur à température ambiante lorsque la température dans l'espace intérieur de la caisse 2 est supérieure à la température ambiante. Dans une autre position, la vanne 33 met en communication les conduites 21 et 35 en obturant la conduite 34, ce qui permet de prélever de l'air dans l'espace intérieur de la caisse 2 et de faire circuler ledit air dans le détendeur 15, ce qui s'avère plus intéressant d'un point de vue énergétique lorsque la température à l'intérieur de la caisse 2 est inférieure à la température ambiante, en d'autres termes, pour une étape de maintien à température basse.

Par ailleurs, la conduite 20 est également pourvue d'une vanne trois voies 36 permettant de mettre la sortie de l'échangeur thermique 14 en communication avec l'extérieur du socle 3 par la conduite 20 ou en communication avec l'intérieur de la caisse 2 par l'intermédiaire d'une conduite 37 débouchant sur la surface supérieure 11 du socle 3 dans la caisse 2. Lors d'une étape de refroidissement ou de maintien à température basse, l'air réchauffé dans l'échangeur thermique 14 est rejeté à l'extérieur par la conduite 20. Au cours d'une opération de chauffage ou de maintien à température élevée, l'air réchauffé dans l'échangeur thermique 14 est envoyé dans la conduite 37 et pénètre dans la caisse 2. Dans ces deux cas, le compresseur 13, le ventilateur 19 et le ventilateur 22 sont mis en fonctionnement. Les vannes 33 et 36 sont préférablement des électrovannes commandées par une unité de commande non représentée, également apte à commander le compresseur 13 et les ventilateurs 19 et 22. Des capteurs de température peuvent également être prévus et reliés à l'unité de commande pour fournir une information de température ambiante et de température dans la conduite 35 proche de la température dans la caisse 2. Le compresseur 13 peut donc à la fois servir au chauffage lors de certaines périodes et au refroidissement lors d'autres périodes pour une utilisation souple du dispositif de transport et de stockage. Une résistance électrique, du type de la résistance 32 de la figure 3, peut être prévue pour un chauffage plus rapide en plus de l'échangeur thermique.

On bénéficie d'un ensemble formé par au moins une caisse en carton à paroi inférieure perforée et un socle frigorifique 3, éventuellement calorifique, permettant de soumettre des produits alimentaires disposés dans la caisse en carton à des températures contrôlées, et ce sans avoir à extraire lesdits produits alimentaires de ladite caisse et au contraire en les maintenant à l'intérieur de ladite caisse entre le moment où lesdits produits alimentaires ont été préparés et le moment où lesdits produits alimentaires seront consommés, ce qui évite à la fois les souillures et les expositions à des températures inadaptées. Lorsque les produits alimentaires sont préparés sur le lieu de leur consommation, les caisses peuvent être transportées vers ledit lieu à l'état plié, puis dépliées et disposées sur un socle. Le volume à transporter est réduit et se limite aux socles pérennes et aux caisses jetables pliées.

## Revendications

1. Dispositif de transport et de stockage de produits alimentaires (1), **caractérisé par le fait qu'**il comprend une caisse jetable (2) comprenant des parois latérales (5) et une paroi supérieure (6) réalisées essentiellement en panneaux biodégradables et un socle (3) capable de supporter la caisse et pourvu de moyens pour chauffer et/ou refroidir l'intérieur de la caisse.

2. Dispositif selon la revendication 1, **caractérisé par le fait que** les panneaux sont ondulés ou alvéolés, enfermant une couche d'air entre des feuilles pour former un panneau isolant.

3. Dispositif selon la revendication 1 ou 2, **caractérisé par le fait qu'**il comprend au moins deux trous (8, 25) traversant une paroi de fond (4) pour permettre l'entrée d'un fluide et la sortie du fluide réchauffé ou refroidi par la circulation autour des produits alimentaires.

4. Dispositif selon l'une quelconque des revendications précédentes, **caractérisé par le fait qu'**au moins un trou (31) traverse la paroi supérieure (6) pour permettre la circulation d'un fluide vers le haut.

5. Dispositif selon l'une quelconque des revendications précédentes, **caractérisé par le fait que** le socle (3) comprend des moyens de refroidissement (15) d'un fluide réfrigérant, une surface supérieure (11) prévue pour supporter au moins une caisse (2), et au moins une conduite (23) d'amenée du fluide réfrigérant en provenance des moyens de refroidissement, débouchant sur la surface supérieure.

6. Dispositif selon l'une quelconque des revendications précédentes, **caractérisé par le fait que** le socle (3) comprend des moyens de chauffage (14, 32) d'un fluide caloporteur, et au moins une conduite d'amenée du fluide caloporteur en provenance des moyens de chauffage, débouchant sur la surface supérieure (11).

7. Dispositif selon la revendication 6, **caractérisé par le fait qu'**un trou (8) traversant une paroi de fond de la caisse est commun au fluide réfrigérant et au fluide caloporteur.

8. Dispositif selon la revendication 6 ou 7, **caractérisé par le fait que** les moyens de chauffage et les moyens de refroidissement comprennent un compresseur (13) commun.

9. Dispositif selon la revendication 6, 7 ou 8, **caractérisé par le fait que** les moyens de chauffage comprennent une résistance électrique (32).

10. Dispositif selon l'une quelconque des revendications 5 à 9,
**caractérisé par le fait que** le socle (3) est pourvu de roues (10).
